# EUROPEAN PATENT APPLICATION

(11) **EP 4 708 183 A1**
(43) Date of publication of application: **11.03.2026**
(21) Application number: 25185924.5
(22) Date of filing: 27.06.2025
(51) Int. Cl.: G06Q 30/0601, G06F 40/35

(54) **PROCUREMENT DEMAND INFORMATION MANAGEMENT METHOD AND ELECTRONIC DEVICE**

(30) Priority: 04.09.2024 CN 202411241075
(71) Applicant: Hangzhou Alibaba International Internet Industry Co., Ltd., Hangzhou City, Zhejiang Province (CN)
(72) Inventor: JIANG, Jianming, Hangzhou City (CN); ZHANG, Guannan, Hangzhou City (CN); CHENG, Yaping, Hangzhou City (CN)
(74) Representative: Wu, Ting

(57) **Abstract**

A method for managing procurement demand information and an electronic device are provided. The method includes: determining procurement demands created by a first user; obtaining response contents of multiple second users' replies and determining corresponding procurement demand identifiers after the first user initiates an inquiry message to the multiple second users based on the procurement demands; performing an aggregated display of response contents of a plurality of second users' replies corresponding to a same procurement demand in response to a request submitted by the first user to view a response status of the procurement demand. Using the method in the present disclosure, the efficiency can be improved, and the labor and time costs can be reduced.

## Description

### Cross Reference to Related Patent Applications

This application is related to and claims priority to Chinese Application No. 202411241075.9, filed on 4 September 2024 and entitled "Procurement Demand Information Management Method and Electronic Device".

### Technical Field

The present disclosure relates to the field of information processing technologies, and in particular to procurement demand information management methods and electronic devices.

### Background

In e-commerce scenarios related to cross-border trade, buyers usually belong to Class B buyers. Different from Class C buyers (individual consumers or terminal buyers who purchase products mainly for personal consumption), Class B buyers usually refer to bulk buyers or corporate buyers who purchase products in large quantities and may use them for commercial purposes, such as wholesale and resale. Therefore, the shopping mode and the interaction mode, etc., on e-commerce platforms will also be different from those of Class C buyers.

In the above scenario, since exchange rates, raw material costs and cross-border transportation, etc., are involved when Class B buyers purchase products bulk purchases, there are also some factory-type merchants among merchants, etc. Therefore, the prices of products are usually not fixed, and some merchants may only sell products to some countries/regions. Therefore, after a Class B buyer has a purchasing demand, he/she usually needs to first initiate an inquiry to an associated merchant through an e-commerce platform. After receiving inquiry information and understanding the buyer's purchasing demands, the merchant can give a quotation, etc., and reply to the buyer through in-site messages, etc. The two parties can then negotiate specific cooperation based on the quotation.

However, a Class B buyer may need to send inquiries to multiple merchants for a procurement demand, so that he/she can make a choice after comparing these merchants. In addition, the same Class B buyer may have a plurality of different procurement demands, and each procurement demand may be inquired to multiple merchants. This means that after the same Class B buyer sends an inquiry, he may receive reply information from multiple different merchants. This information may correspond to the same procurement demand or different procurement demands, but they will be in the same message list. The buyer needs to click to view the details thereof one by one before he/she can determine which procurement demands they correspond to, sort out reply contents that correspond to a same procurement demand, and then analyze and then compare them. The entire process requires a lot of manpower and time costs.

### Summary

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter. The term "techniques," for instance, may refer to device(s), system(s), method(s) and/or processor-readable/computer-readable instructions as permitted by the context above and throughout the present disclosure.

The present disclosure provides a method and an electronic device for managing procurement demand information, which can improve efficiency and reduce labor costs and time costs.

The present disclosure provides the following solution:
A method for managing procurement demand information, includes:
determining procurement demands created by a first user;
obtaining response contents of multiple second users' replies and determining corresponding procurement demand identifiers after the first user initiates an inquiry message to the multiple second users based on the procurement demands; and
performing an aggregated display of response contents of a plurality of second users' replies corresponding to a same procurement demand in response to a request submitted by the first user to view a response status of the procurement demand, wherein the response contents include: a response content generated by a second user with an assistance of an artificial intelligence (AI) big model based on natural language understanding and analysis and summary of the procurement demand.

The method further includes:
providing an operation option for initiating a conversational communication with the second user in a process of performing the aggregated display; and
providing the first user with a recommended conversational speech content through the Al big model, after the first user initiates a request for conversational communication with the second user.

The method further includes:
generating a summary content for communication contents of the multiple second users using the Al big model, and/or a content based on multi-dimensional comparison of communication contents of different second users after the first user has completed communication with all or part of the multiple second users corresponding to the same procurement demand.

The content based on the multi-dimensional comparison of the communication contents of the different second users includes at least one of the following:
a comparison of quoted prices, a comparison of cost-profits, a comparison of logistics costs, a comparison of merchant response enthusiasm, and a comparison of service capabilities between the different second users.

A method for assisting in generating demand response information, includes:
receiving inquiry information initiated by a first user for a procurement demand thereof;

in a process of a second user replying to the inquiry information, performing natural language understanding and analysis and summary on the inquiry information through an Al big model, assisting in generating suggestion information about a response content, and/or generating a modified suggestion content after performing a rationality judgement of the response content input by the second user.

Assisting in generating the suggestion information about the response content includes:
identifying an information dimension related to a purchase decision included in the inquiry information; and
if the inquiry information lacks information on some information dimensions, when generating the suggestion information, generating suggestion information about the response content on missing information dimensions.

The method further includes:
in a process of the second user and the first user communicating with each other, providing the second user with a recommended dialogue content through the Al big model, wherein the first user and the multiple second users include users from different countries/regions.

The method further includes:
when receiving a message of the first user for conducting communication, if a time difference and/or language difference exist(s), using the Al big model as an agent to conduct communication with the first user.

A computer-readable storage medium stores a computer program, which implements the steps of any of the above methods when executed by a processor.

An electronic device includes:
one or more processors; and
a memory associated with the one or more processors, the memory being used to store program instructions, the program instructions, when read and executed by the one or more processors, executing the steps of any of the aforementioned methods.

A computer program product includes computer program/computer executable instructions, the computer program/computer executable instructions, when executed by a processor in an electronic device, implementing the steps of any of the aforementioned methods.

According to the specific embodiments provided by the present disclosure, the present disclosure discloses the following technical effects:
Through the embodiments of the present disclosure, a procurement demand management service can be provided for a first user in a product information service system. Through the management service, the first user can create specific procurement demands in the system, and can then initiate an inquiry message to multiple second users based on the procurement demand. The system can obtain response contents of the multiple second users' replies and determine corresponding procurement demand identifiers. After the first user submits a request to view response statuses of the procurement demands through the above management service, response contents of a plurality of second users' replies corresponding to a same procurement demand can be aggregated and displayed. In this way, this can help the first user to aggregate multiple different response contents corresponding to the same procurement demand for display, so as to facilitate the first user to compare and analyze a plurality of different response contents, which is conducive to improving efficiency, and reducing labor costs and time costs.

In a preferred embodiment, in a process of a second user replying to a response content, the response content can also be replied with an assistance of the Al big model, so as to improve the reply quality of the response content. In a process of the first user and the second user communicating in a conversational manner, the Al big model can also provide recommended dialogue words, etc., to both parties. After the first user has completed the communications with the plurality of second users corresponding to the same procurement demand, the Al big model can also perform summarization or comparison of communication contents of the plurality of different second users corresponding to the same procurement demand to facilitate the first user to view.

Apparently, any product implementing the present disclosure does not necessarily need to achieve all the advantages described above at the same time.

### Brief Description of the Drawings

In order to more clearly illustrate technical solutions in the embodiments of the present disclosure or existing technologies, drawings required for use in the embodiments will be briefly introduced below. Apparently, the drawings described below are only some embodiments of the present disclosure. For one of ordinary skill in the art, other drawings can be obtained based on these drawings without making any creative work.
FIG. 1 is a schematic diagram of system architecture provided by the embodiments of the present disclosure.
FIG. 2 is a flowchart of a first method provided by the embodiments of the present disclosure.
FIG. 3 is a flowchart of a second method provided by the embodiments of the present disclosure.
FIG. 4 is a schematic diagram of an electronic device provided by the embodiments of the present disclosure.

### Detailed Description

The following will be combined with the drawings in the embodiments of the present disclosure to clearly and completely describe the technical solutions in the embodiments of the present disclosure. Apparently, the described embodiments represent only some and not all of the embodiments of the present disclosure. Based on these embodiments in the present disclosure, all other embodiments obtained by one of ordinary skill in the art belong to the scope of protection of the present disclosure.

First of all, it needs to be noted that in the existing technologies, after a Class B buyer (which can be referred to as a "first user" in the embodiments of the present disclosure) generates a purchasing demand, it usually uses a method of searching for relevant products in a cross-border product information service system (that is, a cross-border e-commerce platform, etc.) to find a merchant (also referred to as a supplier, which can be referred to as a "second user" in the embodiments of the present disclosure) of the relevant products and initiating an inquiry. In other words, purchasing demands of the first user will not be instantiated in the cross-border e-commerce platform. In other words, only the first user knows what his/her purchasing demand is, and then roughly determines a product that meets the needs through various methods (including collecting or understanding some product information from some e-commerce platforms for C-end consumers, or based on his/her own experience, "expert" evaluation in short video platforms, etc.), and then searches for the same product in the cross-border e-commerce platform. If found, an inquiry can be initiated to a corresponding second user, and so on. This also leads to the fact that the cross-border e-commerce platform does not actually know a corresponding relationship between the procurement demand and the inquiry information, and could not even be possible to know which second users the first user has initiated inquiries to for the same procurement demand. This is also the main reason why the first user can only click one by one from a message list to view reply messages of the second users, and then manually sort and compare them in the existing technologies. In addition, in the existing technologies, whether it is the first user initiating an inquiry, or the second user responding, as well as dialogues and communications between the first user and the second user, and then comparison after the first user receives the response content or conducts communication with the second user, etc., are usually completed manually.

In view of the above situation, in the embodiments of the present disclosure, in order to help buyers and sellers improve efficiency and reduce costs in a process of inquiring and replying, a corresponding solution is provided. In this solution, first, for a buyer (which can be referred to as a "first user" in the embodiments of the present disclosure), a procurement demand management interface can be provided for the first user in a cross-border e-commerce platform and other systems. After the first user generates a purchasing demand, the purchasing demand can be created through the management interface, including inputting category information of products to be purchased, target market information (that is, after the Class B buyer purchases the specific products through the current cross-border e-commerce platform, the target countries or regions to which these products need to be sold), etc. The system can then create a unique identifier for the specific purchasing demand, so that the system can mark the specific purchasing demand of the user. In an optional method, the system can also recommend information about related products to the first user based on the purchasing demand of the first user, or directly initiate a search based on the category information associated with the purchasing demand, and display search results to the first user. By browsing these recommended or searched products, the first user can select some of the products that are of interest, and initiate an inquiry to corresponding merchants (also referred to as suppliers, which can be referred to as "second users" in the embodiments of the present disclosure). After receiving the inquiry information, the second users can reply to the first user with response messages. Afterwards, if the first user needs to view the replies of the second users, a viewing request can be directly initiated through the above-mentioned management interface. Accordingly, the response contents of multiple different second users' replies can be aggregated and displayed in the interface in units of purchasing demand. That is to say, respective response contents of a plurality of different second users corresponding to a same procurement demand will be aggregated and displayed together. In this way, the first user no longer needs to search for the response contents one by one in the message list interface. Since in a cross-border scenario, the first user and multiple second users may come from different countries. Therefore, in a process of aggregating and displaying the response contents of multiple different second users' replies, the response contents of multiple second users' replies in different languages can also be translated, and then aggregated and displayed.

In addition, in a specific implementation process, an Al (Artificial Intelligence) big model can also be introduced to help the first user and the second users complete the above-mentioned inquiry and/or response processes. The so-called Al big model refers to a deep learning model including an enormous number of parameters. Due to its large scale, this Al big model can store and process a large amount of information, thereby achieving higher performance in various tasks. Therefore, by relying on the powerful natural language text understanding and logical thinking abilities of the pre-trained Al big model, a second user can be helped to provide relevant suggestions in a process of replying to a response content, or the second user's response content can be judged for rationality, to improve the quality of the response content. In addition, after receiving the second user's response content, the first user may also have a dialogue with the second user. During this communication process, the Al big model can also be used to recommend dialogue words for both parties. Furthermore, after the plurality of second users corresponding to the same procurement demand have completed communication or partially completed communication, the Al big model can also be used to summarize communication contents of the plurality of different users corresponding to the same procurement demand, or the communication contents of the plurality of different second users can be compared in multiple dimensions, such as quotation price comparison, cost profit comparison, logistics cost comparison, merchant response enthusiasm comparison, merchant salesman service ability comparison, etc.

Regarding the Al big model, the Al big language model can be used specifically. Apparently, the Al big model can be fine-tuned and trained based on open-source Al big models using the data in relevant scenarios of the embodiments of the present disclosure, so that the Al big model can not only have the original basic knowledge base, but also obtain some general knowledge bases in cross-border e-commerce scenarios. In addition, the Al big model can be fine-tuned according to some relevant data of specific second users, so that the Al big model obtains the special knowledge base of the specific second users, etc. Apparently, after introducing the special knowledge base of a specific second user, the Al big model becomes an exclusive model of the second user and can be used exclusively to serve the second user.

Through the above method, response contents of the second users' replies can be aggregated according to the procurement demand, and the Al big model can be used to assist the first user to improve the communication effect and efficiency, assist the second users to understand the needs of the first user, assist the second users to generate response contents such as quotation sheets, assist the first user to summarize or compare communication results, and so on. Through the above method, the time and labor costs of the first user can be reduced, which is conducive to improving the quality of the response contents of the second users' replies. In addition, by summarizing and comparing the responses or communication contents of the plurality of different second users corresponding to the same procurement demand, for example, the decision-making confidence and decision-making speed of the first user can be improved.

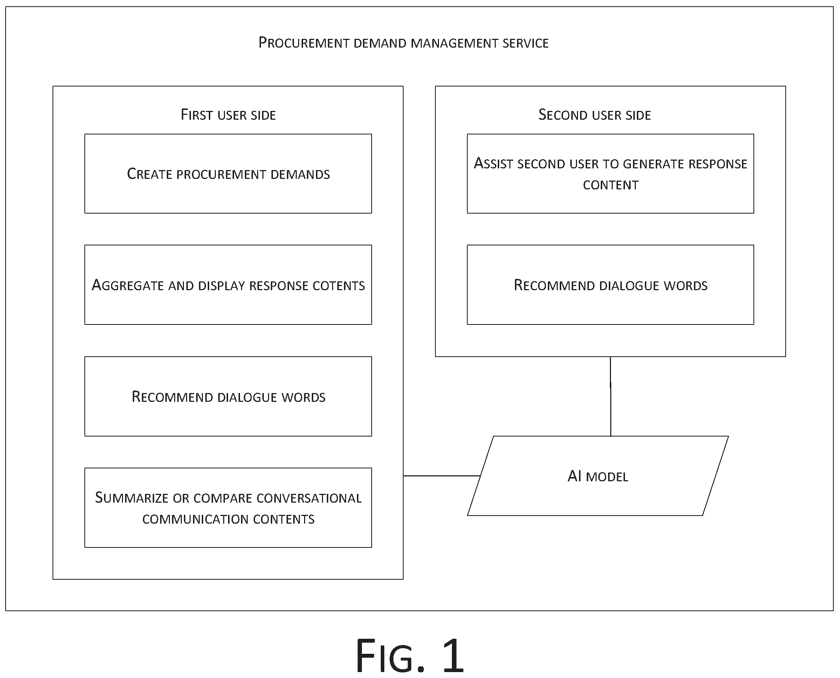

From the perspective of system architecture, as shown in FIG. 1, the embodiments of the present disclosure can provide procurement demand management services for first users such as Class B buyers in a cross-border product information service system (usually referred to as a cross-border e-commerce platform, or an international station of an e-commerce platform, etc.). A first user can create procurement demands in the system. After the system searches or recommends products based on the specific procurement demands, the first user can initiate an inquiry to a second user based on a specific product. In this process, the Al big model can be used to help the second user generate a relevant suggestion on a response content and make a reasonable judgment on the response content of the second user. On the side of the first user, response contents of multiple second users corresponding to a same procurement demand can also be aggregated and displayed. When the first user needs to have a dialogue and communication with a second user, the Al big model can also be used to help the first user and the second user to provide suggested dialogue words of both parties in a dialogue and communication process, and the Al big model can be used to help the first user to summarize or compare the dialogue and communication contents of a plurality of second users, etc.

The specific implementation solution provided by the embodiments of the present disclosure is introduced in detail below.

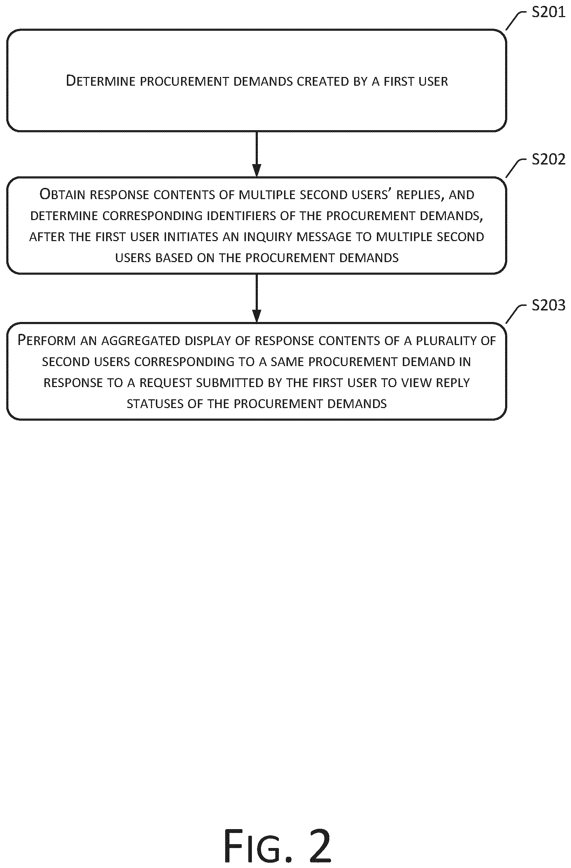

The present disclosure provides a method for managing procurement demand information from the perspective of a first user (i.e., a Class B buyer who is an initiator of the procurement demand, etc.). Referring to FIG. 2, the method may specifically include:
S201: Determine procurement demands created by a first user.

In the embodiments of the present disclosure, during a process of selecting products by a first user through a cross-border e-commerce platform, a procurement demand management interface may be provided to the first user, through which an entry for creating a procurement demand may be provided, so the first user may first create a specific procurement demand in the system. Specifically, category information of specific products to be purchased may be specified in procurement demand details. In addition, other information may also be set in the procurement demand details, which include, for example, a target sales market of a purchased product (usually represented by the target country or region, etc.), etc.

S202: Obtain response contents of multiple second users' replies, and determine corresponding identifiers of the procurement demands, after the first user initiates an inquiry message to multiple second users based on the procurement demands.

After the first user creates a specific procurement demand, the first user can initiate product selection by clicking a "Go to product selection" button on a procurement demand details page, and the cross-border product information service system can recommend potentially suitable products to the user through a product list page, or provide search results based on product category information associated with the procurement demand. Afterwards, the first user can also select some products from this product list page to add for comparison. After comparing multiple products on a product comparison page, the first user can choose to initiate an inquiry to a second user (that is, a merchant or supplier) corresponding to one or some products. Alternatively, the first user can also directly initiate an inquiry to the second user associated with the one or some products from the above product list page, and so on.

Since the user's product selection and inquiry process starts with the creation of a procurement demand, when an inquiry message is initiated to a second user associated with a certain product, the inquiry message can carry an associated procurement demand identifier. In this way, the system can determine which inquiry messages are associated with the same procurement demand based on procurement demand identifiers associated with the inquiry messages. Correspondingly, after the second user receives the inquiry message, when replying, the above-mentioned procurement demand identifier can also be carried in a response message. Therefore, after receiving the response message of the second user, the system can determine the procurement demand identifier associated with a response content in the response message through the procurement demand identifier carried therein.

S203: Perform an aggregated display of response contents of a plurality of second users corresponding to a same procurement demand in response to a request submitted by the first user to view reply statuses of the procurement demands.

After the first user sends an inquiry message, if he/she needs to check replies of the second users, he/she can also initiate a request through a relevant entry provided in the aforementioned procurement demand management interface. Accordingly, response contents of a plurality of second users corresponding to a same procurement demand can be aggregated and displayed. For example, in specific implementations, after the first user initiates a specific viewing request, a list of procurement demands associated with the first user can be displayed, from which the user can first select a procurement demand. An interface for an aggregate display of multiple response contents associated with the procurement demand can then be displayed. In this way, since a plurality of different response contents corresponding to the same procurement demand can be aggregated together into the same interface for display, the first user no longer needs to perform a search in the message interface, which facilitates the first user to compare and view the plurality of different response contents.

It needs to be noted here that, after the second user receives the inquiry request, an Al big model can also be used to help the second user generate the response content in a process of inputting the response content. For example, the Al big model can generate suggestion information about the response content, and/or a modified suggestion content generated after a rationality judgment of the reply content input by the second user, etc. The specific content generated depends on prompt information (i.e., Prompt) input into the Al big model. The suggestion information about the reply content can specifically include a suggested quotation, etc. In addition, in specific implementations, since the first user usually needs to refer to information on multiple different dimensions, which include a price, a production capacity of the second user, a delivery time, a transportation method, etc., in a process of making a purchasing decision, but the first user may only inquire about some of the dimensions when initiating an inquiry, at this time, the Al big model can attempt to understand the inquiry information of the first user, determine which dimensions are included, and also determine which dimensions are missing. When the second user responds, the Al big model can prompt the second user to respond to these missing dimensions, so that the response content can include key information on more dimensions. The quality of such response content will be higher, which is conducive to reducing subsequent communication costs.

In addition, when assisting the second user in generating the response content, the Al big model can also generate a modified suggestion content after judging the rationality of the response content input by the second user. In other words, after the second user enters some response content, the Al big model can judge the rationality of such response content, and for example, judge whether the second user's quotation is too high, using current market conditions, etc. If so, a more reasonable suggested quotation range can be given, etc. In short, with the assistance of the Al big model, the efficiency and quality of the response content of the second user's reply can be effectively improved. After that, the response content is replied to the first user.

After viewing a response content of a second user, the first user may also need to communicate with the second user in a conversational manner. Therefore, in the process of aggregate display, an operation option for initiating a conversational communication with the second user can be provided to facilitate the first user to initiate a conversational communication with the second user. In specific implementations, if response contents of the multiple second users are displayed in the same interface in a form of different information cards, etc., an operation option as described above can be provided in each information card respectively, so that the first user can initiate conversations separately with different second users, and so on.

After the first user initiates a request for conversational communication with the second user, the Al big model can also provide the first user with a recommended conversational content during the conversation between the two parties. For example, the Al big model can recommend specific questions that need to be asked and specific methods for describing the questions, etc., based on a specific knowledge base. Apparently, the Al big model can also provide a recommended conversational content for the second user.

In addition, since the first user and the second users may come from different countries/regions in the cross-border scenario, there may be some obstacles between the two parties in terms of time difference or language. For example, when the first user initiates a request for dialogue and communication to a second user, it may be the night rest time in the country/region where the second user is located. At this time, the second user will not be able to reply in time. Therefore, in view of the above situation, the embodiments of the present disclosure can also provide an Al proxy service for the second user, i.e., when the first user initiates a dialogue and communication request and the second user cannot reply in time, the Al big model can be used as an agent to have a dialogue with the first user. Apparently, in specific implementations, it can be that when the second user has opened the proxy service, the Al big model acts as the agent of the second user to have a dialogue with the first user. When the second user opens the proxy service as described above, a condition for using the Al agent can also be configured. For example, if the time when the first user initiates the dialogue request is within a certain time period, the Al agent is used to reply, and so on.

After the first user has completed all or part of communications with the plurality of second users corresponding to the same procurement demand, the Al big model can also generate summary content for communication contents of the plurality of second users, and/or multi-dimensional comparison content based on the communication contents of different second users. For example, the communication content of each second user can be summarized separately, and the content of multiple rounds of dialogue can be summarized in a summary form, so that the first user can quickly understand the content of the dialogue between the two parties. In addition, the communication contents of different second users can also be compared. This type of comparison can include comparisons in multiple dimensions, such as price comparison, cost-profit comparison, logistics cost comparison, merchant response enthusiasm comparison, merchant salesman service ability comparison, etc. The merchant response enthusiasm, the merchant salesman service ability, etc. can also be concluded by the Al big model through reasoning after analyzing and understanding the specific communication content.

It needs to be noted that in the content of the above description, when a second user needs to generate a reply content such as a quotation after receiving an inquiry request, or when the second user receives the first user's dialogue communication request and communicates with the first user, the Al big model mainly acts as an "assistant" of the second user to help the second user complete the generation of the reply content or the rationality judgment, or help the second user to recommend dialogue words in the dialogue communication, etc. In specific implementations, especially when the Al big model is trained to be sufficiently "intelligent", the Al big model may directly replace the second user to generate specific reply content such as a quotation, etc., or the Al big model may directly communicate with the first user, which is not limited herein.

In short, through the embodiments of the present disclosure, a procurement demand management service can be provided for a first user in a product information service system. Through this management service, the first user can create specific procurement demands in the system, and then, based on the procurement demands, the first user can initiate an inquiry message to multiple second users. The system can obtain response contents of the multiple second users' replies and determine corresponding procurement demand identifiers. After the first user submits a request to view reply statuses of the procurement demands through the above management service, response contents of a plurality of second users' replies corresponding to a same procurement demand can be aggregated and displayed. In this way, the first user can aggregate a plurality of different response contents corresponding to the same procurement demand for display, so as to facilitate the first user to compare and analyze the plurality of different response contents, which is conducive to improving efficiency and reducing labor costs and time costs.

In a preferred embodiment, when a second user replies to a response content, the response content can also be replied with the assistance of an Al big model, so as to improve the reply efficiency and the quality of the response content. During a conversational communication between the first user and the second user, the Al big model can also provide recommended dialogue words, etc., to both parties. After the first user has completed the communication with the plurality of second users corresponding to the same procurement demand, the Al big model can also summarize or compare communication contents of the plurality of different second users corresponding to the same procurement demand to facilitate the first user to view.

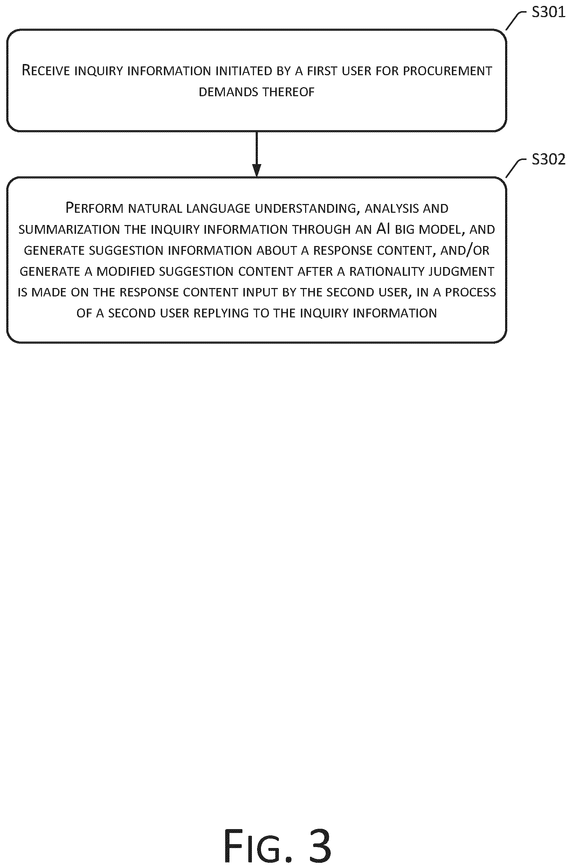

The present disclosure provides a method for assisting in generating demand response information for the second user, that is, the merchant or supplier. Referring to FIG. 3, the method may specifically include:
S301: Receive inquiry information initiated by a first user for procurement demands thereof.
S302: Perform natural language understanding, analysis and summarization the inquiry information through an Al big model, and generate suggestion information about a response content, and/or generate a modified suggestion content after a rationality judgment is made on the response content input by the second user, in a process of a second user replying to the inquiry information.

Specifically, when generating a suggestion information about a response content, an information dimension related to a procurement decision included in the inquiry information can be identified. If the inquiry information lacks information on some information dimensions, the suggestion information about the reply content on missing information dimensions can be generated when the suggestion information is generated.

In addition, in a process of communicating with the first user, the Al big model can also provide a second user with a recommended dialogue content.

For parts that are not described in detail in this embodiment, reference can be made to the description of the foregoing embodiments and other parts of this specification, which will not be repeated herein.

It needs to be noted that the embodiments of the present disclosure may involve the use of user data. In practical applications, user-specific personal data may be used in the solutions described herein within the scope permitted by applicable laws and regulations in compliance with the applicable laws and regulations of the country (for example, the user's explicit consent, the user's effective notification, etc.).

Corresponding to the foregoing method embodiments, the embodiments of the present disclosure also provide a procurement demand information management apparatus, which may include:
a procurement demand determination unit, configured to determine procurement demands created by a first user;
a response content acquisition unit, configured to obtain response contents of multiple second users' replies after the first user initiates an inquiry message to the multiple second users based on the procurement demands, and determine corresponding identifiers of the procurement demands; and
a response content aggregation display unit, configured to perform an aggregated display of response contents of a plurality of second users' replies corresponding to a same procurement demand in response to a request submitted by the first user to view a response status of the procurement demand.

The response contents include: the response contents generated by the second users with assistance on the basis of the natural language understanding and analysis and summary of the procurement demands by an artificial intelligence (AI) big model.

In addition, the apparatus may also include:
a dialogue option providing unit, configured to provide an operation option for initiating a dialogue communication with a second user during a process of the aggregate display; and
a speech content recommendation unit, configured to provide the first user with a recommended dialogue speech content through the Al big model after the first user initiates a request for dialogue communication with a second user.

Furthermore, the apparatus may also include:
a communication content summary unit, configured to generate summary content for communication contents of the plurality of second users through the Al big model after the first user has completed all or part of communications with the plurality of second users corresponding to the same procurement demand, and/or a content based on a multi-dimensional comparison of the communication contents of the plurality of different second users.

The content based on the multi-dimensional comparison of the communication contents of the plurality of different second users includes at least one of the following items:
a quotation price comparison, a cost-profit comparison, a logistics cost comparison, a merchant response enthusiasm comparison, and a service capability comparison between the plurality of different second users.

Corresponding to the forgoing method embodiments, the embodiments of the present disclosure also provide an apparatus for assisting in generating need response information, which may include:
an inquiry information receiving unit, configured to receive an inquiry information initiated by a first user for procurement demands thereof;
an auxiliary reply content generating unit, configured to perform natural language understanding and analysis and summary of the inquiry information through an Al big model during a process of a second user replying to the inquiry information, and assist in generating suggestion information about a response content, and/or, generate a modified suggestion content after judging the rationality of the response content input by the second user.

The auxiliary reply content generating unit can be specifically configured to:
identify an information dimension related to a purchasing decision included in the inquiry information; and
if the inquiry information lacks information on some information dimensions, when generating the suggestion information, generate suggestion information about the response content on missing information dimensions.

In addition, the apparatus may also include:
a speech content recommendation unit, configured to provide the second user with a recommended dialogue speech content through the Al big model during a process of the second user communicating with the first user.

The first user and the multiple second users include users from different countries/regions.

The apparatus may also include:
a proxy reply unit, configured to communicate with the first user through the Al big model as a proxy when receiving a message for dialogue communication from the first user, if a time difference and/or language difference exist(s).

In addition, the embodiments of the present disclosure also provide a computer-readable storage medium, on which a computer program is stored, and when the program is executed by a processor, the steps of any one of the methods in the aforementioned method embodiments are implemented.

An electronic device, includes:
one or more processors; and
a memory associated with the one or more processors, the memory being configured to store program instructions, the program instructions, when read and executed by the one or more processors, executing the steps of the method described in any one of the aforementioned method embodiments.

A computer program product, includes a computer program/computer executable instructions, the computer program/computer executable instructions, when executed by a processor in an electronic device, implementing the steps of the methods described in the aforementioned method embodiments.

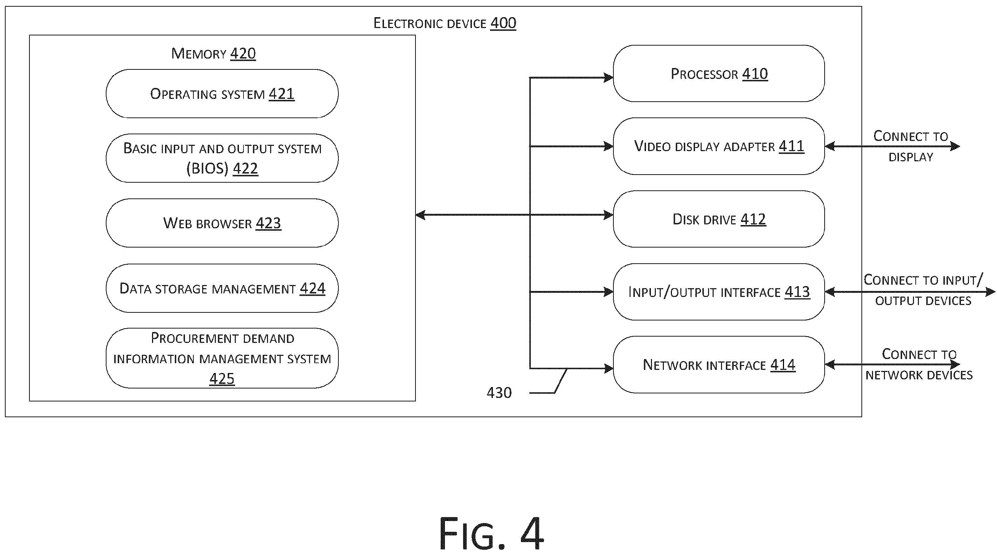

FIG. 4 exemplarily shows the architecture of an electronic device, which may specifically include a processor 410, a video display adapter 411, a disk drive 412, an input/output interface 413, a network interface 414, and a memory 420. The processor 410, the video display adapter 411, the disk drive 412, the input/output interface 413, the network interface 414, and the memory 420 can be communicatively connected via a communication bus 430.

The processor 410 can be implemented by a general-purpose CPU (Central Processing Unit, processor), a microprocessor, an application-specific integrated circuit (Application Specific Integrated Circuit, ASIC), or one or more integrated circuits, etc., for executing relevant programs to implement the technical solutions provided by the present disclosure.

The memory 420 can be implemented in a form of ROM (Read Only Memory, read-only memory), RAM (Random Access Memory, random access memory), a static storage device, a dynamic storage device, etc. The memory 420 can store an operating system 421 for controlling operations of the electronic device 400, and a basic input and output system (BIOS) is used for controlling low-level operations of the electronic device 400. In addition, a web browser 423, a data storage management system 424, and a procurement demand information management processing system 425 can also be stored. The above-mentioned procurement demand information management processing system 425 can be an application program that specifically implements the aforementioned steps in the embodiments of the present disclosure. In short, when the technical solutions provided by the present disclosure are implemented by software or firmware, relevant program codes are stored in the memory 420, and are called and executed by the processor 410.

The memory 420 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk. In the embodiments of the present disclosure, the storage component 901 may include memory, which may include a form of computer readable media such as a volatile memory, a random access memory (RAM) and/or a non-volatile memory, for example, a read-only memory (ROM) or a flash RAM. The memory 420 is an example of a computer readable media.

The computer readable media may include a volatile or non-volatile type, a removable or non-removable media, which may achieve storage of information using any method or technology. The information may include a computer readable instruction, a data structure, a program module or other data. Examples of computer readable media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

The input/output interface 413 is configured to connect an input/output module to realize information input and output. The input/output/module can be configured as a component in the device (not shown in the figure), or can be externally connected to the device to provide corresponding functions. The input device may include a keyboard, a mouse, a touch screen, a microphone, various sensors, etc., and the output device may include a display, a speaker, a vibrator, an indicator light, etc.

The network interface 414 is configured to connect a communication module (not shown in the figure) to realize communication interactions between the device and other devices. The communication module can realize communication through a wired method (such as USB, network cable, etc.) or a wireless method (such as mobile network, WIFI, Bluetooth, etc.).

The bus 430 includes a channel to transmit information between various components of the device (such as the processor 410, the video display adapter 411, the disk drive 412, the input/output interface 413, the network interface 414, and the memory 420).

It needs to be noted that although the above device only shows the processor 410, the video display adapter 411, the disk drive 412, the input/output interface 413, the network interface 414, the memory 420, the bus 430, etc., in specific processes of implementation, the device may also include other components necessary for normal operation. In addition, one skilled in the art can understand that the above device may also only include components necessary for implementing the solutions of the present disclosure, and it is not necessary to include all the components shown in the figure.

As can be known from the description of the above implementation methods, one skilled in the art can clearly understand that the present disclosure can be implemented by means of software plus a necessary general hardware platform. Based on such an understanding, the essence of technical solutions of the present disclosure or the part that contributes to the existing technologies can be embodied in a form of a software product. Such computer software product can be stored in a storage medium, such as ROM/RAM, a disk, an optical disk, etc., including a number of instructions for a computer device (which can be a personal computer, a server, or a network device, etc.) to execute the methods described in each embodiment of the present disclosure or some parts of the embodiments.

Each embodiment in this specification is described in a progressive manner, and the same and similar parts between the embodiments can be referred to each other. The emphasis of each embodiment is different from other embodiments. In particular, since systems or system embodiments are basically similar to the method embodiments, the description thereof is relatively simple, and relevant parts can refer to parts of the descriptions of the method embodiment. The systems and system embodiments described above are only schematic, wherein units described as separate components may or may not be physically separated, and a component displayed as a unit may or may not be a physical unit, i.e., may be located in one place, or may be distributed on multiple network units. Some or all of the modules can be selected according to actual needs to achieve the purpose of the solutions of the embodiments of the present disclosure. One of ordinary skill in the art can understand and implement thereof without making any creative work.

The procurement demand information management methods and electronic devices provided by the present disclosure are introduced in detail above. This text uses specific examples to explain the principles and implementation methods of the present disclosure. The description of the above embodiments is only used to help understand the methods and their core ideas of the present disclosure. At the same time, for one of ordinary skill in the art, according to the ideas of the present disclosure, there will be changes in the specific implementation methods and scopes of application. In summary, the content of this specification should not be understood as a limitation on the present disclosure.

The present disclosure can be further understood using the following clauses.

Clause 1: A method for managing procurement demand information, comprising: determining procurement demands created by a first user; obtaining response contents of multiple second users' replies and determining corresponding procurement demand identifiers after the first user initiates an inquiry message to the multiple second users based on the procurement demands; and performing an aggregated display of response contents of a plurality of second users' replies corresponding to a same procurement demand in response to a request submitted by the first user to view a response status of the procurement demand.

Clause 2: The method according to Clause 1, wherein: the response contents include: a response content generated by a second user with an assistance of an artificial intelligence (AI) big model based on natural language understanding and analysis and summary of the procurement demand.

Clause 3: The method according to Clauses 1 or 2, further comprising: providing an operation option for initiating a conversational communication with the second user in a process of performing the aggregated display; and providing the first user with a recommended conversational speech content through the Al big model, after the first user initiates a request for conversational communication with the second user.

Clause 4: The method according to any one of Clauses 1 to 3, further comprising: generating a summary content for communication contents of the multiple second users using the Al big model, and/or a content based on multi-dimensional comparison of communication contents of different second users after the first user has completed communication with all or part of the multiple second users corresponding to the same procurement demand.

Clause 5: The method according to any one of Clauses 1 to 4, wherein: the content based on the multi-dimensional comparison of the communication contents of the different second users includes at least one of the following: a comparison of quoted prices, a comparison of cost-profits, a comparison of logistics costs, a comparison of merchant response enthusiasm, and a comparison of service capabilities between the different second users.

Clause 6: A method for assisting in generating demand response information, comprising: receiving inquiry information initiated by a first user for a procurement demand thereof; and in a process of a second user replying to the inquiry information, performing natural language understanding and analysis and summary on the inquiry information through an Al big model, assisting in generating suggestion information about a response content, and/or generating a modified suggestion content after performing a rationality judgement of the response content input by the second user.

Clause 7: The method according to Clause 6, wherein assisting in generating the suggestion information about the response content includes: identifying an information dimension related to a purchase decision included in the inquiry information; and if the inquiry information lacks information on some information dimensions, when generating the suggestion information, generating suggestion information about the response content on missing information dimensions.

Clause 8: The method according to Clauses 6 or 7, further comprising: in a process of the second user and the first user communicating with each other, providing the second user with a recommended dialogue content through the Al big model.

Clause 9: The method according to any one of Clauses 6 to 8, wherein: the first user and the multiple second users include users from different countries/regions; the method further comprises: when receiving a message of the first user for conducting communication, if a time difference and/or language difference exist(s), using the Al big model as an agent to conduct communication with the first user.

Clause 10: A computer-readable storage medium having a computer program stored thereon, wherein the program, when executed by a processor, implements the steps of the method described in any one of Clauses 1 to 9.

Clause 11: An electronic device, comprises: one or more processors; and a memory associated with the one or more processors, the memory being configured to store program instructions, wherein the program instructions, when read and executed by the one or more processors, execute the steps of the method described in any one of Clauses 1 to 9.

Clause 12: A computer program product, comprising a computer program/computer executable instructions, wherein the computer program/computer executable instructions, when executed by a processor in an electronic device, implement(s) the steps of the method described in any one of Clauses 1 to 9.

## Claims

1. A method implemented by a computing device, the method comprising:
determining procurement demands created by a first user;
obtaining response contents of multiple second users' replies and determining corresponding procurement demand identifiers, after the first user initiates an inquiry message to the multiple second users based on the procurement demands; and
performing an aggregated display of response contents of a plurality of second users' replies corresponding to a procurement demand of the procurement demands in response to a request submitted by the first user to view a response status of the procurement demand.

2. The method according to claim 1, wherein the response contents of the multiple second users' replies include: a response content generated by a second user of the of multiple second users with an assistance of an artificial intelligence, Al, big model based on natural language understanding and analysis and summary of the procurement demand.

3. The method according to claim 1 or 2, further comprising:
providing an operation option for initiating a conversational communication with a second user of the multiple second users in a process of performing the aggregated display; and
providing the first user with a recommended conversational speech content through the Al big model, after the first user initiates a request for conversational communication with the second user.

4. The method according to any one of claims 1 to 3, further comprising:
generating at least one of:
a summary content for communication contents of the multiple second users using an artificial intelligence, Al, big model, or
a content based on a multi-dimensional comparison of communication contents of different second users after the first user has completed communication with all or part of the multiple second users corresponding to the procurement demand.

5. The method according to any one of claims 1 to 4, wherein:
the content based on the multi-dimensional comparison of the communication contents of the different second users comprises at least one of:
a comparison of quoted prices, a comparison of cost-profits, a comparison of logistics costs, a comparison of merchant response enthusiasm, or a comparison of service capabilities between the different second users;
optionally wherein the first user and the multiple second users include users from different countries/regions.

6. The method according to any one of claims 1 to 5, wherein determining the corresponding procurement demand identifiers comprises determining the corresponding procurement demand identifiers from respective response messages of multiple second users that include the response contents of the multiple second users' replies.

7. One or more non-transitory media storing executable instructions that, when executed by one or more processors, cause the one or more processors to perform operations comprising:
determining procurement demands created by a first user;
obtaining response contents of multiple second users' replies and determining corresponding procurement demand identifiers, after the first user initiates an inquiry message to the multiple second users based on the procurement demands; and
performing an aggregated display of response contents of a plurality of second users' replies corresponding to a procurement demand of the procurement demands in response to a request submitted by the first user to view a response status of the procurement demand.

8. The one or more non-transitory media according to claim 7, wherein the response contents of the multiple second users' replies include: a response content generated by a second user of the of multiple second users with an assistance of an artificial intelligence, Al, big model based on natural language understanding and analysis and summary of the procurement demand.

9. The one or more non-transitory media according to claim 7 or 8, the operations further comprising:
providing an operation option for initiating a conversational communication with a second user of the multiple second users in a process of performing the aggregated display; and
providing the first user with a recommended conversational speech content through the Al big model, after the first user initiates a request for conversational communication with the second user.

10. The one or more non-transitory media according to any one of claims 7 to 9, the operations further comprising:
generating at least one of:
a summary content for communication contents of the multiple second users using an artificial intelligence, Al, big model, or
a content based on a multi-dimensional comparison of communication contents of different second users after the first user has completed communication with all or part of the multiple second users corresponding to the procurement demand;
optionally wherein: the content based on the multi-dimensional comparison of the communication contents of the different second users comprises at least one of: a comparison of quoted prices, a comparison of cost-profits, a comparison of logistics costs, a comparison of merchant response enthusiasm, or a comparison of service capabilities between the different second users.

11. The one or more non-transitory media according to any one of claims 7 to 10, wherein the first user and the multiple second users include users from different countries/regions.

12. The one or more non-transitory media according to any one of claims 7 to 11, wherein determining the corresponding procurement demand identifiers comprises determining the corresponding procurement demand identifiers from respective response messages of multiple second users that include the response contents of the multiple second users' replies;
optionally the one or more non-transitory media further comprising: providing search results based at least in part on product category information associated with the procurement demand.

13. An apparatus comprising:
one or more processors; and
memory storing executable instructions that, when executed by the one or more processors, cause the one or more processors to perform operations comprising:
receiving inquiry information initiated by a first user for a procurement demand thereof; and
in a process of a second user replying to the inquiry information, performing natural language understanding and analysis and summary on the inquiry information through an Al big model, assisting in generating suggestion information about a response content, and/or generating a modified suggestion content after performing a rationality judgement of the response content input by the second user.

14. The apparatus according to claim 13, wherein assisting in generating the suggestion information about the response content includes:
identifying an information dimension related to a purchase decision included in the inquiry information; and
if the inquiry information lacks information on some information dimensions, when generating the suggestion information, generating suggestion information about the response content on missing information dimensions.

15. The apparatus according to claim 13 or 14, wherein the operations further comprise:
in a process of the second user and the first user communicating with each other, providing the second user with a recommended dialogue content through the Al big model;
optionally wherein the first user and the multiple second users include users from different countries/regions;
optionally wherein the operations comprise: when receiving a message of the first user for conducting communication, if one or more of a time difference or language difference exist, using the Al big model as an agent to conduct communication with the first user.
